# FASCICULE DE BREVET EUROPEEN

(11) **EP 2 286 198 B1**
(45) Date de publication et mention de la délivrance du brevet: **18.01.2012**
(21) Numéro de dépôt: 09766034.4
(22) Date de dépôt: 15.05.2009
(51) Int. Cl.: G01M 11/02

(54) **DISPOSITIF DE DEMONSTRATION ET DE TEST DES QUALITES COSMETIQUES D'UNE LENTILLE OPHTALMIQUE**
VORRICHTUNG ZUM DEMONSTRIEREN UND TESTEN DER KOSMETISCHEN QUALITÄTEN EINER KONTAKTLINSE
DEVICE FOR DEMONSTRATING AND TESTING THE COSMETIC QUALITIES OF AN OPHTHALMIC LENS

(30) Priorité: 12.06.2008 FR 0853897
(43) Date de publication de la demande: 23.02.2011
(73) Titulaire: Essilor International (Compagnie Générale d'Optique), 94220 Charenton-le-Pont (FR)
(72) Inventeur: NADOLNY, Carole, F-94220 Charenton-le-pont (FR); TANTIN, Sylvie, F-94220 Charenton-le-pont (FR)
(74) Mandataire: Lenne, Laurence
(86) Numéro de dépôt international: PCT/FR2009/050906
(87) Numéro de publication internationale: WO 2009/153472

(56) Documents cités:
- WO-A-2008/047045
- GB-A- 2 293 023
- US-A- 1 336 040
- US-A- 1 803 473
- US-A- 2 546 329
- US-A- 2 566 058

## Description

L'invention concerne un dispositif de démonstration et de test des qualités cosmétiques d'une lentille ophtalmique.

Les qualités cosmétiques d'une lentille sont en particulier relatives à la résistance à l'abrasion, à l'absence de rayures suite à un traitement spécifique, à l'absence de coloration du matériau et/ou du traitement anti reflet.

Il est connu d'évaluer le niveau cosmétique d'une lentille en regardant au travers de cette lentille un tube néon. Cependant un tel procédé exige un oeil averti, afin d'obtenir un résultat fiable.

Par ailleurs, le document de brevet US 1 336 040 décrit un dispositif de test d'une lentille ophtalmique, comportant une paroi d'appui sur une surface fixe pourvue, sur sa face opposée à l'appui, d'une cible de visualisation et une paroi de support de la lentille disposée à une distance d'environ 40 millimètres de la face de ladite paroi d'appui pourvue de la cible.

Ce dispositif connu ne convient pas à la démonstration et au test des qualités cosmétiques d'une lentille ophtalmique.

Ce type de dispositif à section en Vé comporte une paroi de support qui est incliné d'un angle de 45° par rapport à la paroi d'appui et donc à la cible de visualisation. Il en résulte un grand champ d'observation et une distance entre la lentille et la cible importante et non constante. L'observateur est donc systématiquement peu concentré sur une évaluation de qualités de la lentille.

Par ailleurs, un tel agencement génère une ombre gênante pour l'observation, de la paroi de support. L'inégalité de contraste de l'ombre est également gênante, elle est projetée sur la cible et l'observateur a tendance à diriger le regard en conséquence.

Enfin, un tel dispositif entraîne, lorsque l'observateur regarde la cible à travers la lentille, un effet de perspective qui déforme la vision des motifs de cette cible.

L'invention propose un dispositif de démonstration et de test des qualités cosmétiques d'une lentille ophtalmique qui soit simple à utiliser, qui puisse servir tout autant de démonstrateur pour opticiens que de matériel d'instrumentation et qui puisse être utilisé aisément par une personne béotienne. Ce dispositif résout les problèmes évoqués plus haut.

Pour ce faire, l'invention propose un dispositif de démonstration et de test des qualités cosmétiques d'une lentille ophtalmique par visualisation, comportant une paroi d'appui sur une surface fixe pourvue, sur sa face opposée à l'appui, d'une cible de visualisation et une paroi de support de ladite lentille disposée à une distance comprise entre 20 à 50 millimètres de ladite face de ladite paroi d'appui pourvue de la cible, caractérisé en ce qu'il est constitué d'une pièce support constituée d'un profilé de section en U formant par ses branches ladite surface d'appui et ladite paroi de support, cette dernière étant pourvue d'au moins un orifice de dimension inférieure à celle de ladite lentille et ladite surface d'appui et ladite surface de support étant inclinées l'une par rapport à l'autre d'un angle compris entre 0° et 25°.

L'inclinaison relativement faible de la paroi de support par rapport à la paroi d'appui permet d'éviter également une différence de perception de la qualité cosmétique entre le haut de la lentille et le bas de la lentille.

Cette faible inclinaison assure également une moindre sensibilité à l'éclairage ambiant et des effets d'ombre de la paroi de support sur la cible.

Selon un mode de réalisation préféré, ladite pièce de support est en matière plastique transparente.

De préférence, ladite paroi de support est revêtue extérieurement d'un revêtement noir et mat.

Ladite paroi de support peut être inclinée par rapport à ladite paroi d'appui.

Ladite distance est de préférence d'environ 25 millimètres.

De préférence, ledit orifice est circulaire.

Ladite lentille peut être fixée à ladite paroi de support.

L'invention concerne en particulier un tel dispositif de démonstration et de test de l'abrasion d'une lentille ophtalmique par visualisation, caractérisé en ce que la cible présente un fond blanc et mat et des motifs noirs et mats.

De préférence, la surface visualisée de la cible comporte sensiblement 20 à 45% de motifs noirs.

Avantageusement, lesdits motifs présentent un espace blanc entre eux.

La cible peut être une échelle d'acuité, notamment une échelle de Parinaud.

L'invention concerne l'utilisation d'un tel dispositif, comportant un dit orifice, caractérisé en ce qu'elle consiste à considérer une dite lentille sensiblement centrée sur le dit orifice et à visualiser la cible.

L'invention concerne l'utilisation d'un tel dispositif, comportant deux dits orifices, pour démontrer et tester les qualités cosmétiques d'une lentille ophtalmique, caractérisé en ce qu'elle consiste à considérer une dite lentille de référence sensiblement centrée sur l'un des dits orifices et à considérer une dite lentille à tester sensiblement centrée sur l'autre des dits orifices, à regarder successivement la cible au travers de chaque lentille et à déterminer la qualité de ladite lentille testée, par considération de l'image visualisée.

De préférence, pour démonstration et test de l'abrasion d'une lentille, ladite lentille de référence et ladite lentille à tester ont subi un même test d'abrasion.

L'invention concerne l'utilisation d'un tel dispositif, comportant deux rangées parallèles de n dits orifices, pour démontrer et tester les qualités cosmétiques d'une lentille ophtalmique, caractérisé en ce qu'elle consiste à considérer n dites lentilles de référence classées, sensiblement centrées sur les dits orifices d'une rangée et à poser une dite lentille testée sensiblement centrée sur les dits orifices de l'autre rangée, à regarder successivement la cible au travers de chaque lentille et à déterminer la lentille de référence correspondant à la lentille testée, par comparaison de l'image visualisée.

De préférence, ladite visualisation est effectuée en vision de près par un observateur humain.

Avantageusement, chaque dite lentille est de puissance nulle.

L'invention est décrite ci-après plus en détail à l'aide de figures ne représentant que des modes de réalisation préférés.
La figure 1 est une vue en perspective d'un premier mode de réalisation d'un dispositif de démonstration et de test conforme à l'invention.
La figure 2A et 2B sont des vues en perspective d'un deuxième mode de réalisation d'un dispositif de démonstration et de test conforme à l'invention.
La figure 3 est une vue en perspective d'un troisième mode de réalisation d'un dispositif de démonstration et de test conforme à l'invention.
Les figures 4A à 4C sont des vues de différentes cibles de visualisation pour la réalisation d'un dispositif de démonstration et de test conforme à l'invention.

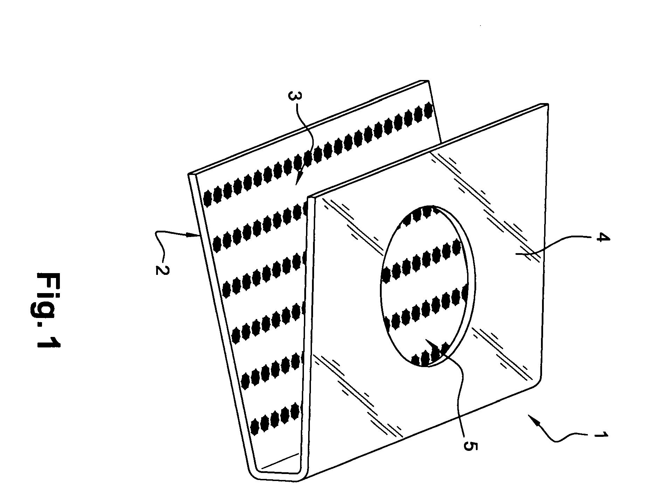

Selon le premier mode de réalisation, illustré sur la figure 1, un dispositif de démonstration et de test conforme à l'invention comporte une pièce support 1 comportant une paroi d'appui 2 sur une surface fixe horizontale pourvue, sur sa face opposée à l'appui, d'une cible de visualisation 3 et d'une paroi de support 4 d'une lentille, disposée à une distance comprise entre 20 à 50 millimètres au-dessus de la face de la paroi d'appui pourvue de la cible 3 et pourvue d'un orifice 5 de dimension inférieure à celle de la lentille testée.

La paroi de support 4 est ici légèrement inclinée par rapport à un plan horizontal, mais peut également être parallèle à la paroi d'appui 3 en utilisant une base inclinée de support. Cette inclinaison est inférieure à 25°, afin de permettre à l'observateur d'avoir une posture confortable et de s'affranchir des reflets parasites dus à l'éclairage.

La paroi de support 4 est revêtue extérieurement d'un revêtement noir et mat, par exemple de la feutrine.

Ce dispositif est destiné à la démonstration ou au test d'une lentille finie et l'orifice 5 est circulaire.

Un mode d'utilisation de ce dispositif est le suivant.

Une lentille est posée ou fixée sur la paroi de support 4, sensiblement centrée sur l'orifice 5, et une personne regarde la cible 3 au travers de la lentille. Selon la vision de la cible, la qualité cosmétique de la lentille peut être constatée.

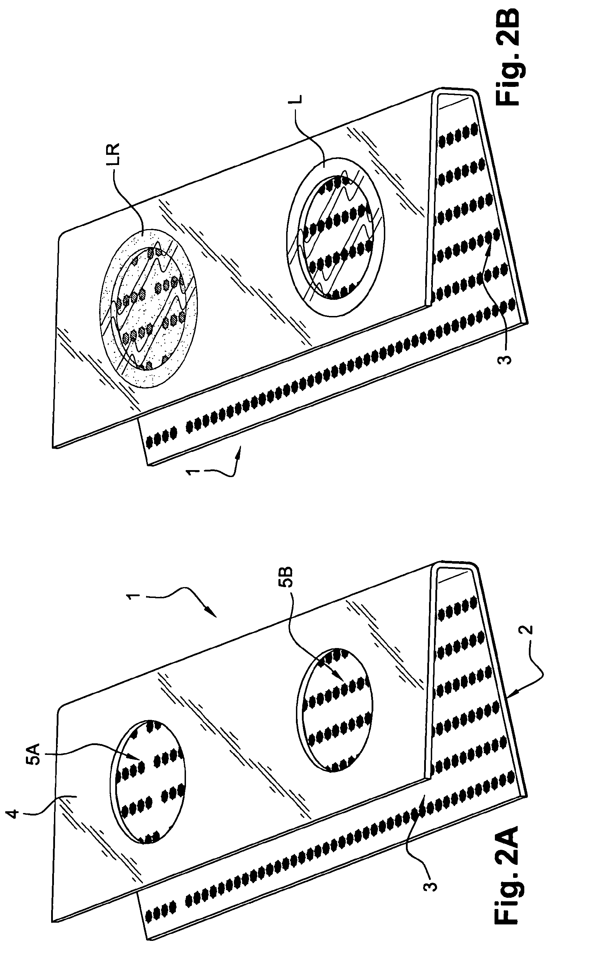

Selon le deuxième mode de réalisation, illustré sur les figures 2, un dispositif de démonstration et de test conforme à l'invention comporte une pièce support 1 comportant une paroi d'appui 2 sur une surface fixe horizontale pourvue, sur sa face opposée à l'appui, d'une cible de visualisation 3 et d'une paroi de support 4 de lentilles, disposée à une distance comprise entre 20 à 50 millimètres au-dessus de la face de la paroi d'appui pourvu de la cible 3 et pourvue de deux orifices 5A et 5B de dimension inférieure à celle des lentilles testées.

La paroi de support 4 est ici légèrement inclinée par rapport à un plan horizontal, afin de faciliter l'observation, mais peut également être parallèle à la paroi d'appui 3, en utilisant une base inclinée de support. Cette inclinaison est inférieure à 25°, afin de permettre à l'observateur d'avoir une posture confortable et de s'affranchir des reflets parasites dus à l'éclairage.

Ce dispositif est destiné à la démonstration ou au test d'une lentille finie et les orifices 5A et 5B sont circulaires.

Un mode d'utilisation de ce dispositif est le suivant.

Comme illustré sur la figure 2B, une lentille de référence LR est posée ou fixée sur la paroi de support 4 sensiblement centrée sur l'un des orifices 5A et une lentille à tester L est posée ou fixée sur la paroi de support 4 sensiblement centrée sur l'autre des orifices 5B. Les deux lentilles LR et L diffèrent par leur substrat ou par leurs revêtements. Elles ont ensuite subi le même test d'abrasion.

L'abrasion des lentilles peut notamment être réalisée au moyen d'un test de résistance à l'abrasion de type BAYER ISTM modifié. Ce test consiste à agiter simultanément un verre échantillon et un verre étalon d'un mouvement alternatif déterminé dans un bac contenant une poudre abrasive de granulométrie définie à une fréquence de 100 cycles/minute pendant 2 minutes. L'abrasion s'effectue sur 600 cycles en utilisant approximativement 1 kg d'alumine (oxyde d'aluminium Al₂O₃) ZF 152412 fournie par la société Ceramic Grains (anciennement Norton Materials, New Bond Street, PO Box 15137 Worcester, Mass. 01615-00137). Le niveau d'abrasion peut aussi être ajusté en modifiant le nombre de cycles ou la masse d'alumine utilisée.

Une personne regarde successivement la cible de visualisation au travers de ces deux lentilles LR, L et détermine la qualité de la lentille testée L. Dans cet exemple représenté, il apparaît que la vision au travers de la lentille testée présente un meilleur contraste et que cette lentille testée L est de qualité cosmétique supérieure à celle de la lentille de référence LR.

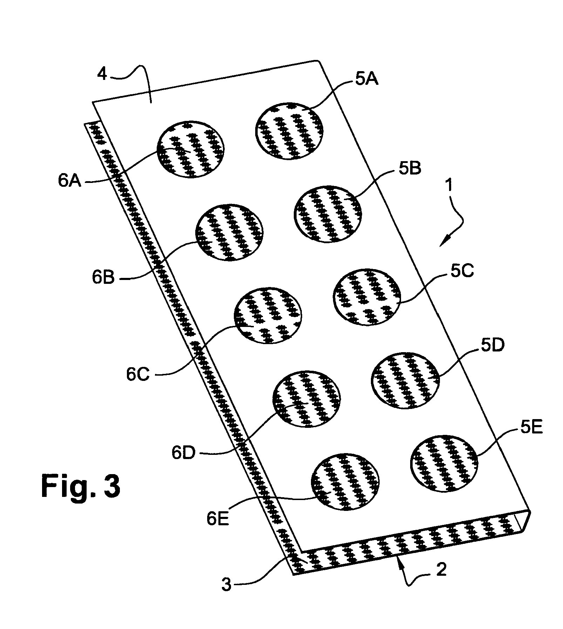

Selon le troisième mode de réalisation, illustré sur la figure 3, un dispositif de démonstration et de test conforme à l'invention comporte une pièce support 1 comportant une paroi d'appui 2 sur une surface horizontale pourvue, sur sa face opposée à l'appui, d'une cible 3 et d'une paroi de support 4 d'une lentille disposée à une distance comprise entre 20 à 50 millimètres au-dessus de la face de la paroi d'appui pourvu de la cible 3 et pourvue de dix orifices 5A à 5E, 6A à 6E, disposés en deux rangées et de dimension inférieure à celle des lentilles testées.

La paroi de support 4 est ici parallèle à la paroi d'appui 3 mais peut être également légèrement inclinée par rapport à un plan horizontal.

Ce dispositif est destiné à la démonstration ou au test d'une lentille finie et les orifices sont circulaires.

Le mode d'utilisation de ce dispositif est le suivant.

Cinq lentilles de référence classées sont posées ou fixées sur la paroi de support 4, sensiblement centrées sur les orifices 5A à 5E de la première rangée. Ces lentilles peuvent notamment être identiques tant par leur substrat que par leurs revêtements et sont ensuite abrasées uniformément sur un diamètre supérieur ou égal à celui de l'orifice. L'abrasion des lentilles peut notamment être réalisée au moyen d'un test de résistance à l'abrasion de type BAYER ISTM en modifiant le nombre de cycles et/ou la masse d'alumine utilisée afin d'obtenir un niveau d'abrasion différent pour chaque lentille de référence.

Une lentille testée est alors posée sensiblement centrée sur les différents orifices 6A à 6E de l'autre rangée et une personne regarde la cible au travers de ces lentilles et, par comparaison, détermine la lentille de référence correspondant à la lentille testée, et donc sa classe de qualité cosmétique.

Il va de soi que dans cet exemple il est réalisé deux rangées de cinq orifices, mais que ce nombre n peut être choisi selon le besoin et de degré de finesse du test. De même, le niveau d'abrasion de chacune des lentilles de référence peut être ajusté selon le besoin et le degré de finesse du test.

Comme il a déjà été précisé, de tels dispositifs sont destinés à la démonstration et au test de lentilles ophtalmiques finies. Le diamètre des orifices 5 est donc choisi sensiblement égal à 50 millimètres, correspondant au diamètre abrasé de telles lentilles. La distance entre orifices 5, lorsque le dispositif en comporte plusieurs, est de l'ordre de 25 millimètres, afin que les lentilles puissent être centrées sur les orifices 5 tout en restant relativement proches l'une de l'autre, afin de faciliter leur observation et comparaison.

La pièce support 1, dont la section est en U, peut être fabriquée en matière plastique transparente, par exemple en Plexiglas ou en polycarbonate.

La paroi de support 4 est revêtue extérieurement d'un revêtement noir et mat, par exemple en feutrine. La couleur noire astreint l'individu à regarder dans le ou les orifice(s) 5. L'utilisation de feutrine est particulièrement avantageuse, lorsque les lentilles sont posées sur la paroi de support 4, afin d'éviter leur glissement.

A l'aide de tels dispositifs, l'invention consiste plus particulièrement en une démonstration et/ou un test de l'abrasion d'une lentille ophtalmique par visualisation par un individu, consistant à disposer la lentille à une distance comprise entre 20 à 50 millimètres, de préférence d'environ 25 millimètres, au-dessus d'une cible de visualisation 3 présentant un fond blanc et mat et des motifs noirs et mats et à visualiser la cible 3 à une distance comprise entre 20 et 80 centimètres, afin de déterminer la qualité d'abrasion, par considération du contraste de l'image visualisée. Cette démonstration ou ce test est effectué de préférence en vision de près et la distance entre l'oeil de l'individu et la cible est comprise entre 33 et 40 centimètres, selon la taille de l'individu.

La distance de 25 millimètres permet de mettre en évidence une différence de contraste entre L'image visible au travers des lentilles.

A titre d'exemple, l'angle d'observation par rapport à la verticale est de l'ordre de 30°.

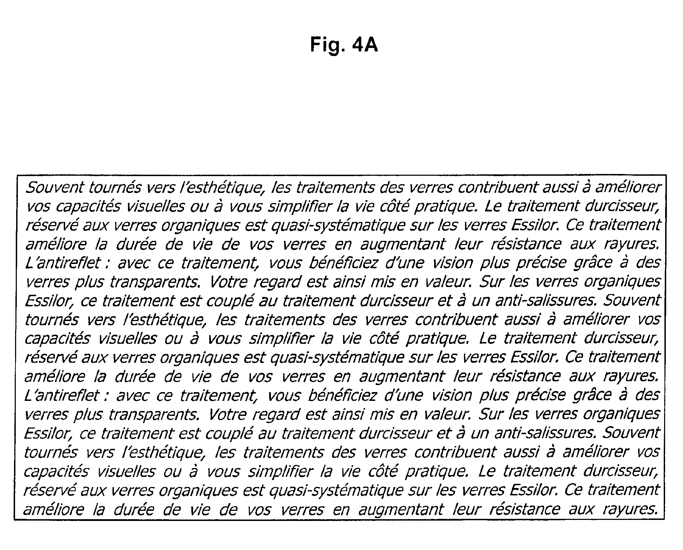

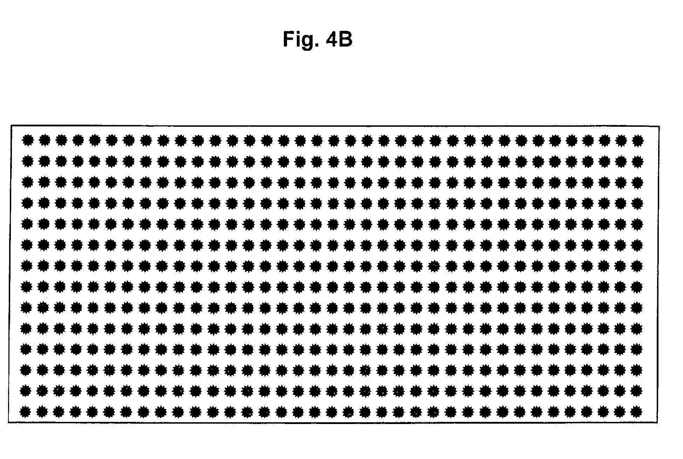

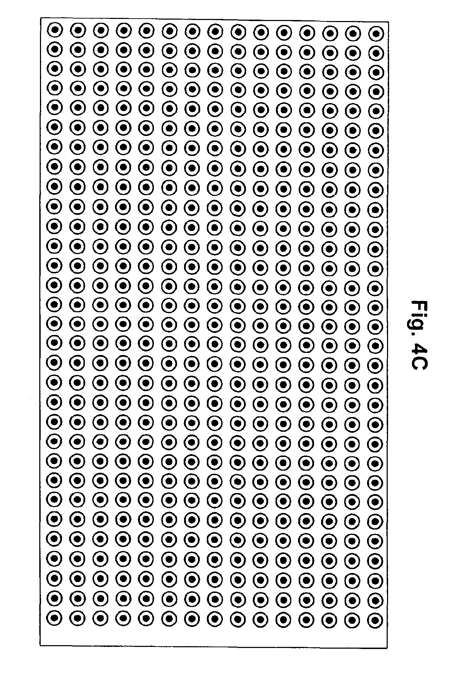

Il s'avère que ce procédé donne de bons résultats, lorsque la surface visualisée de la cible comporte entre 20 à 45% de motifs noirs par rapport à la surface visualisée totale, comme les échantillons de cible représentés sur les figures 4. De préférence, il est choisi une cible dont la surface visualisée comporte sensiblement 70% de blanc et 30% de noir. Les motifs de ces cibles présentent au moins un léger espace blanc entre eux.

La cible de visualisation peut être un texte dont la taille des caractères est équivalente à une échelle de Parinaud de niveau P6 visualisée à 33 cm, telle qu'illustrée sur la figure 4A. L'échelle de Parinaud est un test classique utilisé pour l'évaluation de l'acuité en vision de près.

La cible de visualisation est imprimée de préférence sur un papier sans azurant, afin d'avoir une bonne blancheur. Ce papier est de préférence de rugosité nulle et sans grain. L'utilisation des couleurs noire et blanche assure un contraste de 100% des motifs par rapport au fond blanc.

Lors de l'utilisation de tels dispositifs, il est recherché de s'affranchir de tout reflet résiduel.

L'éclairage est de préférence naturel. Dans le cas d'un éclairage artificiel, il est préférable qu'il soit non direct à une distance de l'ordre de 1,50 mètres et d'utiliser des ampoules de type lumière du jour D40 comme il est classiquement utilisé dans les magasins d'opticiens.

Hors le cas de personnes ayant un problème spécifique de vision, l'utilisation s'applique en vision binoculaire, avec une acuité optimale de vision, avec ou sans correction.

Avantageusement, chaque lentille testée est de puissance nulle.

L'invention ne se limite pas aux caractéristiques des modes de réalisation précisément décrits.

Au lieu d'opérer par vision humaine, il est possible d'utiliser un système de caméra et de logiciel d'analyse d'images pour considérer la cible 3 au travers de la ou des lentille(s) et tester ainsi de façon plus automatique une lentille.

Tel qu'il a été décrit ci-dessus, le dispositif peut être utilisé en tant qu'outil de démonstration chez les opticiens, pour démontrer les propriétés anti abrasion, ou pour montrer des performances de durabilité de lentilles.

Un tel dispositif peut également être utilisé pour évaluer la couleur résiduelle des verres ou la couleur du traitement anti reflets. Dans ces cas, la cible de visualisation sera adaptée au but recherché et peut par exemple être colorée.

## Revendications

1. Dispositif de démonstration et de test des qualités cosmétiques d'une lentille ophtalmique par visualisation, comportant une paroi d'appui (2) sur une surface fixe pourvue, sur sa face opposée à l'appui, d'une cible de visualisation (3) et une paroi de support (4) de ladite lentille disposée à une distance comprise entre 20 à 50 millimètres de ladite face de ladite paroi d'appui (2) pourvue de la cible, **caractérisé en ce qu'**il est constitué d'une pièce support (1) constituée d'un profilé de section en U formant par ses branches ladite surface d'appui (2) et ladite paroi de support (4), cette dernière étant pourvue d'au moins un orifice (5) de dimension inférieure à celle de ladite lentille et ladite surface d'appui et ladite surface de support étant inclinées l'une par rapport à l'autre d'un angle compris entre 0° et 25°.

2. Dispositif selon la revendication précédente, **caractérisé en ce que** ladite pièce de support (1) est en matière plastique transparente.

3. Dispositif selon la revendication 1 ou 2, **caractérisé en ce que** ladite paroi de support (4) est revêtue extérieurement d'un revêtement noir et mat.

4. Dispositif selon l'une des revendications précédentes, **caractérisé en ce que** ladite paroi de support (4) est inclinée par rapport à ladite paroi d'appui (2).

5. Dispositif selon l'une des revendications précédentes, **caractérisé en ce que** ladite distance est d'environ 25 millimètres.

6. Dispositif selon l'une des revendications précédentes, **caractérisé en ce que** ledit orifice (5) est circulaire.

7. Dispositif selon l'une des revendications précédentes, **caractérisé en ce que** ladite lentille est fixée à ladite paroi de support (4).

8. Dispositif de démonstration et de test de l'abrasion d'une lentille ophtalmique par visualisation, selon l'une des revendications précédentes, **caractérisé en ce que** la cible (3) présente un fond blanc et mat et des motifs noirs et mats.

9. Dispositif selon la revendication précédente, **caractérisé en ce que** la surface visualisée de la cible (3) comporte sensiblement 20 à 45% de motifs noirs.

10. Dispositif selon la revendication 8 ou 9, **caractérisé en ce que** lesdits motifs présentent un espace blanc entre eux.

11. Dispositif selon l'une des revendications 8 à 10, **caractérisé en ce que** la cible est une échelle d'acuité.

12. Utilisation d'un dispositif selon l'une des revendications précédentes, comportant un dit orifice (5), pour démontrer et tester les qualités cosmétiques d'une lentille ophtalmique, **caractérisé en ce qu'**elle consiste à considérer une dite lentille sensiblement centrée sur le dit orifice (5) et à visualiser la cible (3).

13. Utilisation d'un dispositif selon l'une des revendications 1 à 11, comportant deux dits orifices (5A, 5B), pour démontrer et tester les qualités cosmétiques d'une lentille ophtalmique, **caractérisé en ce qu'**elle consiste à considérer une dite lentille de référence (LR) sensiblement centrée sur l'un des dits orifices et à considérer une dite lentille à tester (L) sensiblement centrée sur l'autre des dits orifices, à regarder successivement la cible (3) au travers de chaque lentille et à déterminer la qualité de ladite lentille testée (L), par considération de l'image visualisée.

14. Utilisation pour démonstration et test de l'abrasion d'une lentille, d'un dispositif selon la revendication précédente, **caractérisé en ce que** ladite lentille de référence (LR) et ladite lentille à tester (L) ont subi un même test d'abrasion.

15. Utilisation d'un dispositif selon l'une des revendications 1 à 11, comportant deux rangées parallèles de n dits orifices (5A à 5E, 6A à 6E), pour démontrer et tester les qualités cosmétiques d'une lentille ophtalmique, **caractérisé en ce qu'**elle consiste à considérer n dites lentilles de référence classées, sensiblement centrées sur les dits orifices d'une rangée (5A à 5E) et à poser une dite lentille testée sensiblement centrée sur les dits orifices de l'autre rangée (6A à 6E), à regarder successivement la cible (3) au travers de chaque lentille et à déterminer la lentille de référence correspondant à la lentille testée, par comparaison de l'image visualisée.

16. Utilisation selon l'une des revendications 12 à 15, **caractérisé en ce que** ladite visualisation est effectuée en vision de près par un observateur humain.

17. Utilisation selon l'une des revendications 12 à 16, **caractérisé en ce que** chaque dite lentille est de puissance nulle.

## Claims

1. A device for demonstrating and testing the cosmetic qualities of an ophthalmic lens by viewing, comprising a prop-up panel (2) on a fixed surface provided on the side thereof opposite the prop with a viewing target (3), and a panel (4) for supporting said lens arranged at a distance comprised between 20 and 50 millimeters from said side of said prop-up panel (2) provided with the target, **characterized in that** it is made of a supporting piece (1) made of a U-section profile forming with the sides thereof said prop-up surface (2) and said supporting panel (4), the latter being provided with at least one orifice (5) of a dimension smaller than that of said lens, and said prop-up surface and said supporting surface being inclined with respect to each other at an angle comprised between 0° and 25°.

2. The device according to the preceding claim, **characterized in that** said supporting part (1) is made of transparent plastic material.

3. The device according to claim 1 or 2, **characterized in that** said supporting wall (4) is covered on the outside with a matt black coating.

4. The device according to any of the preceding claims, **characterized in that** said supporting panel (4) is inclined with respect to said prop-up panel (2).

5. The device according to any of the preceding claims, **characterized in that** said distance is about 25 millimeters.

6. The device according to any of the preceding claims, **characterized in that** said orifice (5) is circular.

7. The device according to any of the preceding claims, **characterized in that** said lens is fastened to said supporting panel (4).

8. The device for demonstrating and testing the abrasion of an ophthalmic lens by viewing, according to any of the preceding claims, **characterized in that** the target (3) has a matt white background and matt black patterns.

9. The device according to the preceding claim, **characterized in that** the viewed surface of the target (3) comprises substantially 20 to 45 % of black patterns.

10. The device according to claim 8 or 9, **characterized in that** said patterns have a white space therebetween.

11. The device according to any of claims 8 to 10, **characterized in that** the target is an eye chart.

12. Use of a device according to any of the preceding claims, comprising said orifice (5), for demonstrating and testing the cosmetic qualities of an ophthalmic lens, **characterized in that** it consists in examining one said lens substantially centered on said orifice (5) and viewing the target (3).

13. Use of a device according to any of claims 1 to 11, comprising two said orifices (5A, 5B), for demonstrating and testing the cosmetic qualities of an ophthalmic lens, **characterized in that** it consists in examining a so-called reference lens (LR) substantially centered on the one of said orifices and examining a so-called test lens (L) centered on the other one of said orifices, successively observing the target (3) through each lens and determining the quality of said test lens (L) by examining the image viewed.

14. The use for demonstrating and testing the abrasion of a lens, of a device according to the previous claim, **characterized in that** said reference lens (LR) and said test lens (L) have undergone the same abrasion test.

15. Use of a device according to any of claims 1 to 11, comprising two parallel rows of n said orifices (5A to 5E, 6A to 6E) for demonstrating and testing the cosmetic qualities of an ophthalmic lens, **characterized in that** it consists in examining n said ordered reference lenses, substantially centered on said orifices of one row (5A to 5E) and placing one said test lens substantially centered on said orifices of the other row (6A to 6E), successively observing the target (3) through each lens, and determining the reference lens corresponding to the test lens, by comparison with the image viewed.

16. The use according to any of claims 12 to 15, **characterized in that** said viewing is done in near vision by a human observer.

17. The use according to any of claims 12 to 16, **characterized in that** said lens has zero power.

## Patentansprüche

1. Vorrichtung zum Vorführen und Testen der kosmetischen Eigenschaften einer ophthalmischen Linse durch Betrachtung, umfassend eine Wand (2) zum Abstützen auf einer festen Oberfläche, die auf ihrer der Abstützung entgegengesetzten Seite mit einem Betrachtungsziel (3) versehen ist, und eine Wand (4) zum Tragen der Linse, die in einem Abstand zwischen 20 und 50 Millimetern von der Seite der Stützwand (2), die mit dem Ziel versehen ist, angeordnet ist, **dadurch gekennzeichnet, dass** sie aus einem Tragteil (1) besteht, der aus einem Profil mit U-förmigem Querschnitt besteht, das mit seinen Schenkeln die Stützfläche (2) und die Tragwand (4) bildet, wobei letztere mit mindestens einer Öffnung (5) versehen ist, deren Abmessung kleiner ist als die der Linse, und wobei die Stützfläche und die Tragfläche im Verhältnis zueinander in einem Winkel zwischen 0° und 25° geneigt sind.

2. Vorrichtung nach dem vorhergehenden Anspruch, **dadurch gekennzeichnet, dass** der Stützteil (1) aus durchsichtigem Kunststoff hergestellt ist.

3. Vorrichtung nach Anspruch 1 oder 2, **dadurch gekennzeichnet, dass** die Stützwand (4) von außen mit einer mattschwarzen Beschichtung überzogen ist.

4. Vorrichtung nach einem der vorhergehenden Ansprüche, **dadurch gekennzeichnet, dass** die Tragwand (4) im Verhältnis zur Stützwand (2) geneigt ist.

5. Vorrichtung nach einem der vorhergehenden Ansprüche, **dadurch gekennzeichnet, dass** der Abstand ungefähr 25 Millimeter beträgt.

6. Vorrichtung nach einem der vorhergehenden Ansprüche, **dadurch gekennzeichnet, dass** die Öffnung (5) kreisförmig ist.

7. Vorrichtung nach einem der vorhergehenden Ansprüche, **dadurch gekennzeichnet, dass** die Linse an der Tragwand (4) befestigt ist.

8. Vorrichtung zum Vorführen und Testen des Abriebs einer ophthalmischen Linse durch Betrachtung, nach einem der vorhergehenden Ansprüche, **dadurch gekennzeichnet, dass** das Ziel (3) einen mattweißen Hintergrund und mattschwarze Muster aufweist.

9. Vorrichtung nach dem vorhergehenden Anspruch, **dadurch gekennzeichnet, dass** die betrachtete Oberfläche des Ziels (3) im Wesentlichen 20 bis 45 % schwarze Muster umfasst.

10. Vorrichtung nach Anspruch 8 oder 9, **dadurch gekennzeichnet, dass** die Muster einen weißen Zwischenraum dazwischen aufweisen.

11. Vorrichtung nach einem der Ansprüche 8 bis 10, **dadurch gekennzeichnet, dass** das Ziel eine Sehtafel ist.

12. Verwendung einer Vorrichtung nach einem der vorhergehenden Ansprüche, umfassend eine Öffnung (5), zum Vorführen und Testen der kosmetischen Eigenschaften einer ophthalmischen Linse, **dadurch gekennzeichnet, dass** sie darin besteht, eine Linse zu untersuchen, die im Wesentlichen um die Öffnung (5) zentriert ist, und das Ziel (3) zu betrachten.

13. Verwendung einer Vorrichtung nach einem der Ansprüche 1 bis 11, umfassend zwei Öffnungen (5A, 5B), zum Vorführen und Testen der kosmetischen Eigenschaften einer ophthalmischen Linse, **dadurch gekennzeichnet, dass** sie darin besteht, eine so genannte Bezugslinse (LR) zu untersuchen, die im Wesentlichen um die eine der Öffnungen zentriert ist, und eine so genannte Testlinse (L) zu untersuchen, die um die andere der Öffnungen zentriert ist, nacheinander das Ziel (3) durch jede Linse hindurch zu betrachten und die Qualität der Testlinse (L) zu bestimmen, indem das betrachtete Bild untersucht wird.

14. Verwendung zum Vorführen und Testen des Abriebs einer Linse einer Vorrichtung nach dem vorhergehenden Anspruch, **dadurch gekennzeichnet, dass** die Referenzlinse (LR) und die zu Testlinse (L) dem gleichen Abriebtest unterzogen wurden.

15. Verwendung einer Vorrichtung nach einem der Ansprüche 1 bis 11, umfassend zwei parallele Reihen von n Öffnungen (5A bis 5E, 6A bis 6E) zum Vorführen und Testen der kosmetischen Eigenschaften einer ophthalmischen Linse, **dadurch gekennzeichnet, dass** sie darin besteht, die n sortierten Referenzlinsen zu untersuchen, die im Wesentlichen um die Öffnungen einer Reihe (5A bis 5E) zentriert sind, und eine Testlinse einzusetzen, die im Wesentlichen um die Öffnungen der anderen Reihe (6A bis 6E) zentriert ist, nacheinander das Ziel (3) durch jede Linse zu betrachten und die Referenzlinse, die der Testlinse entspricht, durch Vergleich mit dem betrachteten Bild bewertet wird.

16. Verwendung nach einem der Ansprüche 12 bis 15, **dadurch gekennzeichnet, dass** das Betrachten in Nahsicht durch einen menschlichen Betrachter erfolgt.

17. Verwendung nach einem der Ansprüche 12 bis 16, **dadurch gekennzeichnet, dass** jede Linse eine Brechkraft Null aufweist.
